# EUROPÄISCHE PATENTSCHRIFT

(11) **EP 0 475 891 B1**
(45) Veröffentlichungstag und Bekanntmachung des Hinweises auf die Patenterteilung: **23.03.1994**
(21) Anmeldenummer: 91810637.8
(22) Anmeldetag: 13.08.1991
(51) Int. Cl.: B23B 49/02

(54) **Verfahren und Mittel zur Herstellung von Bohrungen**
Method and means for making holes
Méthode et moyen à usiner des trous

(30) Priorität: 03.09.1990 DE 4027868; 06.05.1991 DE 4114703
(43) Veröffentlichungstag der Anmeldung: 18.03.1992
(73) Patentinhaber: HILTI Aktiengesellschaft, 9494 Schaan (LI)
(72) Erfinder: Deutschenbaur, Paul, W-8034 Germering (DE); Bogner, Werner, W-8000 München (DE); Spangenberg, Rolf, W-8035 Gauting (DE)
(74) Vertreter: Wildi, Roland

(56) Entgegenhaltungen:
- AT-A- 390 021
- DE-A- 3 518 496
- US-A- 1 831 813
- US-A- 2 680 435
- US-A- 3 851 990
- US-A- 4 023 907

## Beschreibung

Die Erfindung betrifft ein Verfahren zur Herstellung einer Bohrung in einem Bauteil unter Verwendung eines hohlzylindrischen Bohrwerkzeuges, wobei zunächst am Bauteil ein dessen Oberfläche überragender Anschlag befestigt wird, dann unter Führung am Anschlag das Bohrwerkzeug auf die Oberfläche des Bauteils aufgesetzt und die Bohrung hergestellt wird. (Ziehe z.B. US-A-2 680 435, die den nächstliegenden Stand der Technik beschreibt.)

Bei handgeführten Diamantbohrgeräten bereitet je nach Material und Oberfläche des Bauteils ein zentrisch genaues Anbohren beachtliche Schwierigkeiten. Ebenso ist ein Zentrieren durch Vorbohren mit einem Zentrierbohrer umständlich, da jeweils die Bohrer ausgewechselt werden müssen, was den Arbeitsvorgang verlängert. Zwar bringt ein Anbohren unter 45°, wobei die Krone während des Anbohrvorganges in die 90°-Stel- lung gebracht wird, eine Verbesserung für ein zentrumgenaues Bohren, doch bedarf es einer entsprechenden Übung und Geschick.

Aus der DE-A- 35 18 496 ist ein Verfahren zum Bohren eines Bohrloches in ein Werkstück unter Zuhilfenahme einer Führungshülse bekannt. Zur vorübergehenden Festlegung der Führungshülse am Werkstück dient eine Schablone, die am Werkstück festgelegt wird. Die Festlegung kann über Spitzen oder durch Einschlagen von Stiften erfolgen.

Die US-A- 26 18 436 zeigt ein Bohrgerät mit einer rechtwinklig zur Längsachse des Bohrwerkzeuges verlaufenden Abstützfläche, die einerseits eine Durchtrittsöffnung für das Bohrwerkzeug, andererseits Klebstoff-Verbindungsstellen aufweist, die das seitliche Versetzten der Auflagefläche auf der Oberfläche eines zu bearbeitenden Bauteiles verhindern.

Der Erfindung liegt die Aufgabe zugrunde, ein Verfahren zu entwickeln, so dass in einfacher Weise durchmesser- und werkstoffunabhängig ein zentrumgenaues Anbohren mit Bohrkronen bei handgeführten Bohrgeräten möglich ist.

Erfindungsgemäss wird die Aufgabe dadurch gelöst, dass unter Übergreifen vom Bohrwerkzeug als Anschlag eine Scheibe verwendet wird.

Der die Oberfläche des Bauteiles überragende Anschlag führt das Werkzeug in der gewünschten Richtung während des Anbohrens. Durch entsprechende Durchmesserwahl beim Anschlag kann das Verfahren auf den jeweiligen Durchmesser des Bohrwerkzeuges abgestimmt werden.

Die Bohrkrone kann dank dem erfindungsgemässen Anschlag punktgenau aufgesetzt und geführt werden. Der Bohrvorgang muss nicht unterbrochen werden, da der Anschlag beim weiteren Durchführen der Bohrung nicht stört. Ausserdem übernimmt der Anschlag von Anfang an das Gewicht des Bohrgerätes, indem er es abstützt, was vor allem bei Arbeiten im Schulter- und Überkopfbereich den Anwender entlastet.

Der verfahrensmässige Vorteil wird auch dadurch ersichtlich, dass kein nochmaliges Ansetzen des Bohrgerätes beim Schräganbohren oder Auswechseln eines speziellen Zentrierwerkzeugs notwendig ist. Somit kann ohne zu unterbrechen in einem Arbeitsgang die Bohrung ausgeführt werden.

Das Befestigen eines separaten Anschlags erfolgt je nach Bauteilwerkstoff durch Eintreiben eines Nagels oder Gewindebolzens in das Bauteil oder bei glattem, hartem und sprödem Untergrund, wie etwa Fliesen, durch einen Klebstoff, der beispielsweise durch Abziehen einer Schutzfolie freilegbar ist. Andererseits sind je nach Bedarf Kombinationen der aufgeführten Befestigungsmethoden möglich.

Beispielsweise zur Gewichtsersparnis oder um irgendwelche Bezeichnungen auf dem Bauteil sichtbar zu machen, ist zweckmässigerweise der Anschlag mit axial verlaufenden Durchbrüchen versehen. Solche Durchbrüche können zudem auch die Zu- und Abfuhr von Wasser und Bohrmehl erleichtern.

Der Anschlag kann von einer vom Bohrwerkzeug übergreifbaren Scheibe gebildet sein.

Elemente, die der Halterung des Anschlages dienen, können mittels eines Hammers von Hand oder mittels eines Setzgerätes in das Bauteil eingetrieben werden.

Im Falle der Verwendung einer Scheibe als Anschlag kann der beim Bohren verbleibende Kern durch Wegschlagen rationell, rasch und ohne grosse Umstände entfernt werden, indem beispielsweise der Anschlag als Hilfsmittel zum Angriff solcher Schläge verwendet wird.

Vorteilhafterweise wird bei grösseren Durchmessern der Anschlag als Scheibe mit Ausnehmungen am Aussendurchmesser gestaltet, die den Arbeitsvorgang verbessern und getrennt oder gemeinsam mit Durchbrüchen in der Scheibe der Wasserzu- und -abfuhr sowie der Bohrmehlabfuhr dienen. Das gleiche gilt für Distanzbefestigungen, wo eine solche Scheibe im Abstand von der Oberfläche des Bauteils befestigt ist, zum Beispiel unter Zwischenlage einer Unterlagsscheibe mit einem gegenüber der als Anschlag dienenden Scheibe kleineren Aussendurchmesser.

Bei Verwendung von Bohrwerkzeugen mit sehr grossem Durchmesser wird oft mit einem Bohrwerkzeug von kleinerem Durchmesser vorgebohrt und danach aufgebohrt. In solchen Fällen kann als Anschlag eine im Durchmesser gestufte Scheibe zum Einsatz kommen, wobei der kleinere Durchmesserbereich in die Vorbohrung eingreift und der radial überragende grössere Durchmesserbereich zum Befestigen an der Oberfläche des Bauteils Klebstoff trägt.

Als Material für die als Anschlag dienenden Scheiben kann Metall, Kunststoff, Gummi, Karton und dgl. in Betracht kommen.

Die Erfindung wird nachstehend anhand von Zeichnungen, die verschiedene Ausführungsbeispiele wiedergeben, näher erläutert. Es zeigen:
- Fig. 1: einen befestigten, als Scheibe ausgebildeten Anschlag mit Bohrwerkzeug im Schnitt;
- Fig. 2: ein weiteres Ausführungsbeispiel eines als Scheibe ausgebildeten befestigten Anschlages in der Draufsicht;
- Fig. 3: den Anschlag nach Fig. 2 im Schnitt längs der Linie III-III;

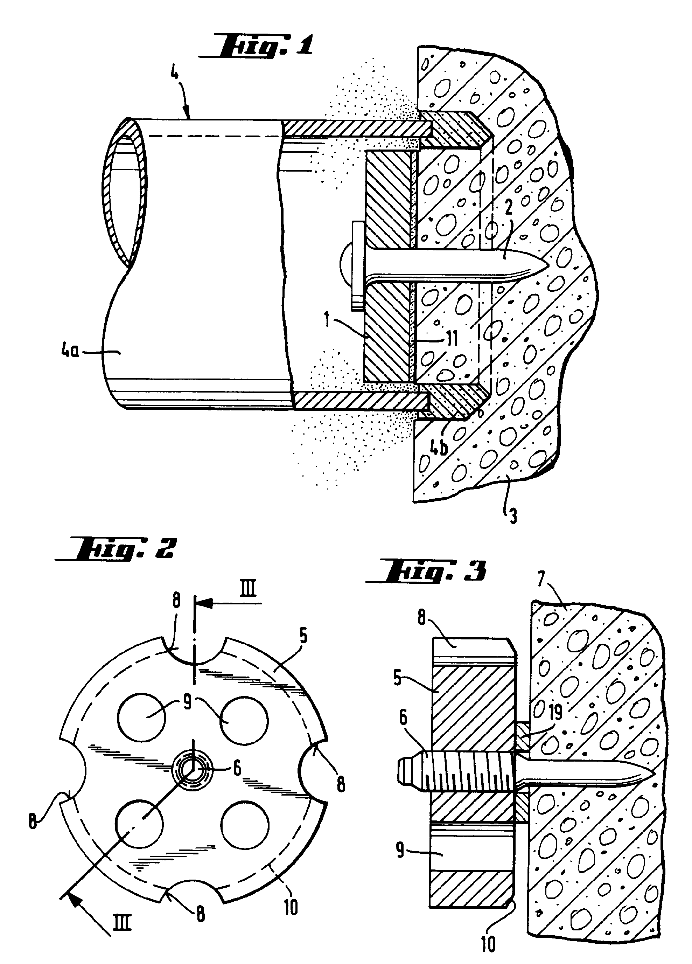

Aus Figur 1 ist ein als Scheibe 1 ausgebildeter Anschlag ersichtlich, der mittels eines Nagels 2 an der Oberfläche eines Bauteiles 3 befestigt ist. Zur Befestigung in Kombination mit dem Nagel 2, zur Befestigung alleine oder nur zur Vorfixierung ist an der dem Bauteil 3 zugewandten Stirnseite der Scheibe 1 ein Klebstoff 11 vorgesehen. Der Nagel 2 ist von Hand mittels eines Hammers oder mittels eines Setzgerätes in das Bauteil 3 eingetrieben worden. Setzgeräte wie sie hier verwendet werden, können beispielsweise mittels Pulverkraft, Druckluft oder Verbrennungsgasen betrieben werden.

Die Figur 1 zeigt ferner ein hohlzylindrisches Bohrwerkzeug 4. Dieses Bohrwerkzeug 4 besteht im vorliegenden Falle aus einem Trägerrohr 4a und Schneidelementen 4b. Es geht aus der Figur 1 deutlich hervor, wie zumindest die Schneidelemente 4b bereits in das Bauteil 3 eingedrungen sind, wobei zu Beginn dieses Eindringens die Scheibe 1 die Führung des Bohrwerkzeuges 4 übernommen hat, so dass ein seitliches Ausweichen vermieden werden kann. In dem in Figur 1 gezeigten Zustand ist das Bohrwerkzeug 4 bereits soweit in das Bauteil 3 eingedrungen, dass die Führung durch die Scheibe 1 überflüssig geworden ist. Das Vorhandensein der Scheibe 1 stört aber nicht, so dass der Bohrvorgang nicht unterbrochen werden muss und nach Beendigung des Bohrvorganges die Scheibe 1 samt dem Bohrkern entfernt werden kann.

Die Figuren 2 und 3 zeigen ein weiteres Ausführungsbeispiel einer als Anschlag dienenden Scheibe 5, welche mittels eines Gewindebolzens 6 an der Oberfläche eines Bauteiles 7 befestigt ist. Dem Eintreiben des Gewindebolzens 6 können wiederum Setzgeräte dienen, die in vorerwähnter Weise angetrieben werden.

Die beiden Figuren 2 und 3 zeigen deutlich, wie die Scheibe 5 Massnahmen aufweist, die der Zu- und Abfuhr des Wassers sowie der Abfuhr des Bohrmehls dienen. Als solche Massnahmen sind am Aussendurchmesser der Scheibe 5 Ausnehmungen 8 vorgesehen. Im weiteren sind zum selben Zwecke axial verlaufende Durchbrüche 9 angeordnet. Als weitere, sich diesbezüglich vorteilhaft auswirkende Massnahme ist zur Oberfläche des Bauteiles 7 hin an der Scheibe 5 eine Anphasung 10 vorgesehen. All diese Massnahmen können in ihrer Wirkung weiter verbessert werden, wenn - wie insbesondere Figur 3 zeigt - die Scheibe 5 unter Zwischenlage einer Unterlagsscheibe 19 im Abstand zur Oberfläche des Bauteiles 7 befestigt ist. Der Durchmesser einer solchen Unterlagsscheibe 19 ist vorzugsweise derart gewählt, dass eine Abdeckung sowohl der Ausnehmungen 8 als auch der Durchbrüche 9 verhindert wird.

## Patentansprüche

1. Verfahren zur Herstellung einer Bohrung in einem Bauteil (3, 7) unter Verwendung eines hohlzylindrischen Bohrwerkzeuges (4), wobei zunächst am Bauteil (3, 7) ein dessen Oberfläche überragender Anschlag befestigt wird, dann unter Führung am Anschlag das Bohrwerkzeug (4) auf die Oberfläche des Bauteils (3, 7) aufgesetzt und die Bohrung hergesellt wird, **dadurch gekennzeichnet,** dass unter Übergreifen vom Bohrwerkzeug (4) als Anschlag eine Scheibe (1, 5) verwendet wird.

2. Verfahren nach Anspruch 1, dadurch gekennzeichnet, dass die Scheibe (1, 5) durch Eintreiben eines Nagels (2) oder Gewindebolzens (6) in das Bauteil (3, 7), durch Klebstoff (11) oder durch Kombination der beiden, auf dem Bauteil (3, 7) befestigt ist.

3. Verfahren nach Anspruch 2, dadurch gekennzeichnet, dass an der Scheibe (1) an der dem Bauteil (3) zugewandten Stirnseite der Klebstoff (11) von einer Schutzfolie freilegbar ist.

4. Verfahren nach einem der Ansprüche 1 bis 3, dadurch gekennzeichnet, dass die Scheibe (5) mit axial verlaufenden Durchbrüchen (9) versehen ist.

5. Verfahren nach einem der Ansprüche 1 bis 4, dadurch gekennzeichnet, dass die Scheibe (5) am Aussendurchmesser mit Ausnehmungen (8) versehen ist.

## Claims

1. Process for the production of a bore in a component (3, 7) by using a hollow cylindrical drilling tool (4), in which respect initially a component (3, 7) is fitted with an abutment which extends the surface of the latter, and then the drilling tool is seated on the surface of the component (3, 7) whilst being guided at the abutment and the bore is produced, **characterised in that** a disc (1, 5) is used as an abutment which is reached over by the drilling tool (4).

2. Process according to claim 1, **characterised in that** the disc (1, 5) is attached to the component (3, 7) by driving a nail (2) or a threaded bolt (6) into the component (3, 7), by use of an adhesive (11) or by a combination of both.

3. Process according to claim 2, **characterised in that** the adhesive (11) is exposed to the disc (1) by a protective foil at the side facing towards the component (3).

4. Process according to one of claims 1 to 3, **charac****terised in that** the disc (5) is provided with axially extending passages (9).

5. Process according to one of claims 1 to 4, **charac****terised in that** the disc (5) is at its outside diameter provided with cut-outs (8).

## Revendications

1. Procédé pour percer un trou dans un élément de construction (3, 7) avec utilisation d'un outil de perçage (4) cylindrique creux, qui consiste à fixer tout d'abord sur l'élément de construction (3, 7) une butée dépassant de la surface de celui-ci, à poser ensuite l'outil de perçage (4) sur la surface de l'élément de construction (3, 7) en le guidant sur la butée, puis à effectuer le perçage, caractérisée en ce qu'une rondelle (1, 5) coiffée par l'outil de perçage (4) est utilisée comme butée.

2. Procédé selon la revendication 1, caractérisé en ce que la rondelle (1, 5) est fixée sur l'élément de construction (3, 7) par l'enfoncement d'un clou (2) ou d'un boulon fileté (6) dans ledit élément de construction (3, 7), par de la matière adhésive (11) ou par la combinaison des deux.

3. Procédé selon la revendication 2, caractérisé en ce que sur la surface frontale de la rondelle (1) tournée vers l'élément de construction (3), la matière adhésive (11) peut être dégagée en retirant une feuille de protection.

4. Procédé selon l'une quelconque des revendications 1 à 3, caractérisé en ce que la rondelle (5) présente des ajours (9) qui s'étendent dans le sens axial.

5. Procédé selon l'une quelconque des revendications 1 à 4, caractérisé en ce que la rondelle (5) est pourvue d'évidements (8) sur le diamètre extérieur.
